# EUROPEAN PATENT APPLICATION

(11) **EP 4 597 662 A1**
(43) Date of publication of application: **06.08.2025**
(21) Application number: 23871501.5
(22) Date of filing: 09.08.2023
(51) Int. Cl.: H01M 10/052, H01M 4/13, H01M 4/36, H01M 4/48

(54) **NONAQUEOUS ELECTROLYTE SECONDARY BATTERY**

(30) Priority: 28.09.2022 JP 2022154967
(71) Applicant: Panasonic Intellectual Property Management Co., Ltd., Kadoma-shi, Osaka 571-0057 (JP)
(72) Inventor: KAWABATA, Satoshi, Kadoma-shi, Osaka 571-0057 (JP); NIINA, Fumiharu, Kadoma-shi, Osaka 571-0057 (JP); IWAMOTO, Takuya, Kadoma-shi, Osaka 571-0057 (JP)
(74) Representative: Eisenführ Speiser
(86) International application number: PCT/JP2023/029030
(87) International publication number: WO 2024/070259

(57) **Abstract**

With respect to a nonaqueous electrolyte secondary battery according to the present disclosure, the positive electrode contains a lithium-containing composite oxide and a sulfonic acid compound that is present on the particle surfaces of the lithium-containing composite oxide; the sulfonic acid compound is represented by formula (I); the negative electrode comprises a negative electrode core body, a first negative electrode mixture layer that is arranged on the surface of the core body, and a second negative electrode mixture layer that is arranged on the surface of the first negative electrode mixture layer; the thickness T1 of the first negative electrode mixture layer and the thickness T2 of the second negative electrode mixture layer satisfy the relational expression 0.1 ≤ T1/(T1 + T2) ≤ 0.9; the first negative electrode mixture layer and the second negative electrode mixture layer each contain a negative electrode active material and a binder; the binder content C1 in the first negative electrode mixture layer and the binder content C2 in the second negative electrode mixture layer satisfy the relational expression C1 > C2. (In the formula, A represents a group 1 element or a group 2 element; R represents a hydrocarbon group; and n is 1 or 2.)

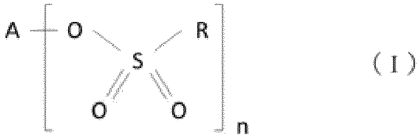

## Description

### TECHNICAL FIELD

The present disclosure relates to a non-aqueous electrolyte secondary battery.

### BACKGROUND ART

Patent Literature 1 proposes an active material in which a surface layer including a lithium sulfonate compound is formed on particle surfaces of lithium titanate mainly containing Li₄Ti₅O₁₂. Patent Literature 1 describes that use of this active material for a negative electrode active material may inhibit change in resistance before and after storage of a charged battery.

### CITATION LIST

### PATENT LITERATURE

PATENT LITERATURE 1: Japanese Unexamined Patent Application Publication No. 2018-6164

### SUMMARY

It is an important challenge in the non-aqueous electrolyte secondary battery to improve charge-discharge cycle characteristics while keeping high capacity. The conventional art including Patent Literature 1 cannot sufficiently deal with the above challenge, and still has large room for improvement.

A non-aqueous electrolyte secondary battery according to the present disclosure comprises: a positive electrode; a negative electrode; and a non-aqueous electrolyte, wherein the positive electrode includes a lithium-containing composite oxide and a sulfonate compound present on particle surfaces of the lithium-containing composite oxide, the sulfonate compound is a compound represented by a formula (I), the negative electrode includes a negative electrode core, a first negative electrode mixture layer disposed on a surface of the core, and a second negative electrode mixture layer disposed on a surface of the first negative electrode mixture layer, a thickness T1 of the first negative electrode mixture layer and a thickness T2 of the second negative electrode mixture layer satisfy 0.1 ≤ T1/(T1+T2) ≤ 0.9, the first negative electrode mixture layer and the second negative electrode mixture layer each include a negative electrode active material and a binder, and a content rate C1 of the binder in the first negative electrode mixture layer and a content rate C2 of the binder in the second negative electrode mixture layer satisfy C1 > C2. 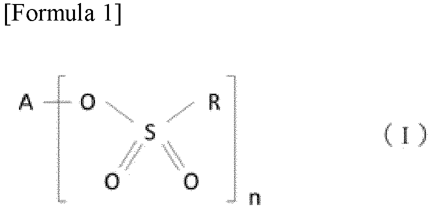 (In the formula, A is a group I element or a group II element, R is a hydrocarbon group, and n is 1 or 2.)

The non-aqueous electrolyte secondary battery according to the present disclosure has high capacity and excellent charge-discharge cycle characteristics.

### BRIEF DESCRIPTION OF DRAWING

FIG. 1 is a sectional view of a non-aqueous electrolyte secondary battery of an example of an embodiment.
FIG. 2 is a sectional view of a negative electrode of an example of an embodiment.

### DESCRIPTION OF EMBODIMENTS

Even when the lithium titanate described in Patent Literature 1 is used for the positive electrode, the reaction potential is low and the battery capacity deteriorates. The present inventors have made investigation to consequently find that the non-aqueous electrolyte secondary battery having high capacity and low resistance may be achieved by presence of the sulfonate compound represented by the formula (I) on particle surfaces of a lithium-containing composite oxide used as a positive electrode active material. This is presumably because the sulfonate compound can function to reduce reaction resistance of the positive electrode and increase charge-discharge depth. However, the increased charge-discharge depth by reducing the reaction resistance causes a new problem of deterioration of charge-discharge cycle characteristics. This is presumably because the increased charge-discharge depth consequently increases change in volume of the negative electrode to deteriorate adhesiveness between the negative electrode core and the negative electrode mixture layer.

The present inventors have made further investigations to successfully improve the charge-discharge cycle characteristics while keeping the high capacity by using a lithium-containing composite oxide having a specific sulfonate compound adhering to particle surfaces as a positive electrode active material, by setting a negative electrode mixture layer to have a bilayer structure, and by setting a content rate of a binder in a first negative electrode mixture layer being on a core side to be larger than a content rate of a binder in a second negative electrode mixture layer being on a surface side. According to the non-aqueous electrolyte secondary battery of the present disclosure, it is considered that adhesiveness between the negative electrode core and the negative electrode mixture layer is sufficiently kept even under a situation with the increased charge-discharge depth to improve the charge-discharge cycle characteristics.

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below. The expression "to" herein means a range including an upper limit and a lower limit of before and after "to".

Hereinafter, a cylindrical battery in which a wound electrode assembly 14 is housed in a bottomed cylindrical exterior housing can 16 will be exemplified as the non-aqueous electrolyte secondary battery, but the exterior body of the battery is not limited to the cylindrical exterior housing can. The non-aqueous electrolyte secondary battery according to the present disclosure may be, for example, a rectangular battery comprising a rectangular exterior housing can, a coin battery comprising a coin-shaped exterior housing can, or a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

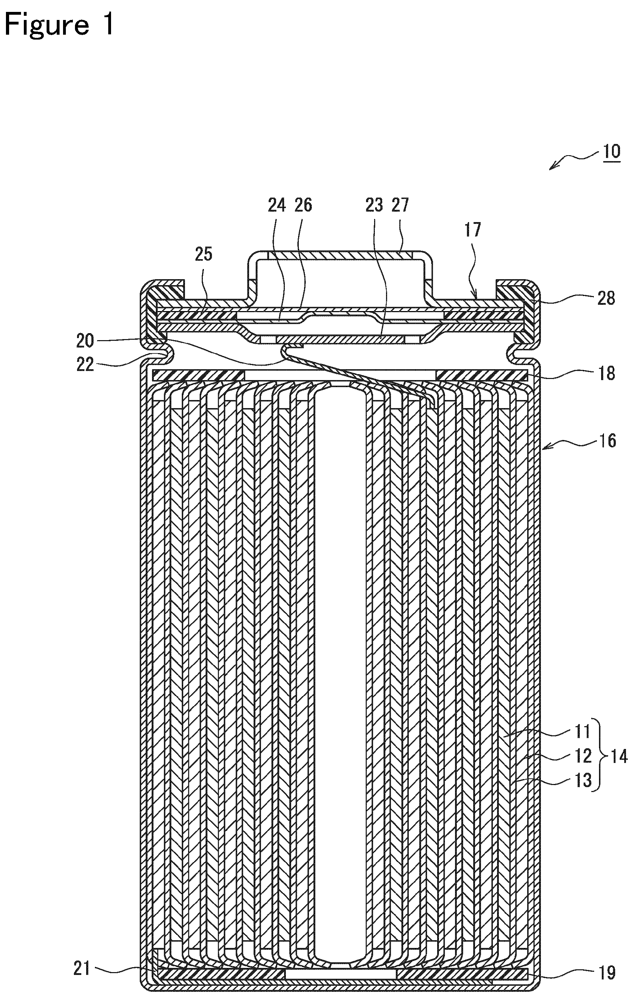

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (electrolyte liquid) or may be a solid electrolyte.

The liquid electrolyte (electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to an inner surface on a bottom of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically a positive electrode active material constituting the positive electrode 11 and a negative electrode active material constituting the negative electrode 12, will be described in detail.

### [Positive Electrode]

The positive electrode 11, for example, has a positive electrode core and a positive electrode mixture layer disposed on a surface of the positive electrode core. For the positive electrode core, a foil of a metal stable within a potential range of the positive electrode 11, such as aluminum, a film in which such a metal is disposed on a surface thereof, and the like may be used. The positive electrode mixture layer includes a positive electrode active material, a conductive agent, and a binder, and is preferably provided on both surfaces of the positive electrode core except for a portion where the positive electrode lead 20 is to be connected. The positive electrode 11 may be produced by, for example, applying a positive electrode mixture slurry including the positive electrode active material, the conductive agent, and the binder on the surface of the positive electrode core, and drying and subsequently compressing the coating film to form the positive electrode mixture layer on both the surfaces of the positive electrode core.

Examples of the conductive agent included in the positive electrode mixture layer include carbon materials such as carbon black such as acetylene black and Ketjenblack, graphite, carbon nanotube (CNT), carbon nanofiber, and graphene. Examples of the binder included in the positive electrode mixture layer include fluorine-containing resins such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide, and the like. Content rates of the conductive agent and the binder are each greater than or equal to 0.1 mass% and less than or equal to 5 mass% relative to a mass of the positive electrode mixture layer, for example.

The positive electrode 11 includes a lithium-containing composite oxide and a sulfonate compound present on particle surfaces of the composite oxide. The lithium-containing composite oxide having the sulfonate compound adhering to the particle surfaces functions as the positive electrode active material. The sulfonate compound is a compound represented by the formula (I).

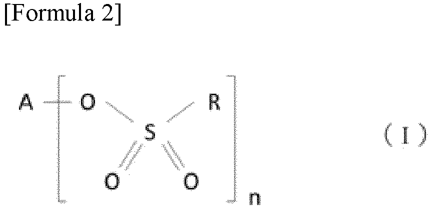

In the formula, A is a group I element or a group II element, R is a hydrocarbon group, and n is 1 or 2.

The sulfonate compound represented by the formula (I) (hereinafter, which may be simply referred to as "sulfonate compound") reduces reaction resistance on the positive electrode 11 to improve output characteristics of the battery. In addition, the reduction in resistance can increase the charge-discharge depth to achieve increase in the capacity.

An amount of the sulfonate compound present on the surface of the lithium-containing composite oxide is preferably greater than or equal to 0.1 mass% and less than or equal to 1 mass% relative to the mass of the lithium-containing composite oxide from the viewpoint of increasing the capacity.

The positive electrode active material mainly contains the composite particles that are the lithium-containing composite oxide having the sulfonate compound adhering to the particle surfaces, and may be constituted with substantially only the composite particles. Note that the positive electrode active material may include a composite oxide other than the composite particles, or another compound within a range not impairing the object of the present disclosure.

The lithium-containing composite oxide preferably has a layered rock-salt structure. Examples of the layered rock-salt structure of the lithium-containing composite oxide include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure. The layered rock-salt structure of the lithium-containing composite oxide includes a transition metal layer, a Li layer, and an oxygen layer.

The lithium-containing composite oxide is a composite oxide containing metal elements such as Ni, Co, Al, and Mn in addition to Li. The metal element constituting the lithium-containing composite oxide is, for example, Ni, Co, and M (M is at least one element selected from the group consisting of Al, Mn, Fe, Ti, Si, Nb, Mo, W, and Zn). Among these, at least one selected from the group consisting of Ni, Co, Al, and Mn is preferably contained. An example of the preferable composite oxide includes a composite oxide containing Ni, Co, and Al, and a composite oxide containing Ni, Co, and Mn.

The lithium-containing composite oxide preferably contains greater than or equal to 80 mol% of Ni relative to a total number of moles of metal elements excluding Li from the viewpoints of increasing the capacity, and the like. The effect by adding the sulfonate compound is more remarkable when the lithium-containing composite oxide having a higher Ni content rate is used. The content rate of Ni may be greater than or equal to 87 mol%, or may be greater than or equal to 90 mol% relative to the total number of moles of the metal elements excluding Li. An upper limit of the Ni content rate is, for example, 95 mol%.

An example of the preferable lithium-containing composite oxide is the composite oxide containing Ni, Co, and M, as noted above. A content rate of Co is, for example, greater than or equal to 0 mol% and less than or equal to 20 mol% relative to the total number of moles of metal elements excluding Li. A content rate of M is, for example, greater than or equal to 0 mol% and less than or equal to 20 mol% relative to the total number of moles of metal elements excluding Li. Co may not be added substantially, but adding a small amount of Co improves the battery performance. M preferably includes at least one of Mn and Al.

The lithium-containing composite oxide is, for example, a composite oxide represented by the general formula LiₐNiₓCo_{y}M_{z}O_{2-b}, wherein 0.95 ≤ a ≤ 1.2, 0.80 ≤ x ≤ 0.95, 0 ≤ y ≤ 0.20, 0 ≤ z ≤ 0.20, 0 ≤ b ≤ 0.05, x+y+z = 1, and M is at least one element selected from the group consisting of Al, Mn, Fe, Ti, Si, Nb, Mo, W, and Zn. In the general formula, "x" preferably satisfies 0.87 ≤ x ≤ 0.95.

The content rates of the elements constituting the lithium-containing composite oxide may be measured with an inductively coupled plasma atomic emission spectrometer (ICP-AES), an electron probe micro analyzer (EPMA), an energy dispersive X-ray analyzer (EDX), and the like.

The lithium-containing composite oxide is of, for example, secondary particles each formed by aggregation of a plurality of primary particles. A volume-based median diameter (D50) of the composite oxide is not particularly limited, and an example thereof is greater than or equal to 3 µm and less than or equal to 30 µm, and preferably greater than or equal to 5 µm and less than or equal to 25 µm. When the composite oxide is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (the same applies to a case of the negative electrode active material) may be measured by using a laser diffraction-type particle size distribution measuring device (for example, MT3000II, manufactured by MicrotracBEL Corp.) with water as a dispersion medium.

An average particle diameter of the primary particles constituting the lithium-containing composite oxide is, for example, greater than or equal to 0.05 µm and less than or equal to 1 µm. The average particle diameter of the primary particles is calculated by averaging diameters of circumscribed circles in the primary particles extracted by analyzing a scanning electron microscope (SEM) image of a cross section of the secondary particles.

The sulfonate compound present on the particle surfaces of the lithium-containing composite oxide is the compound represented by the formula (I), as noted above.

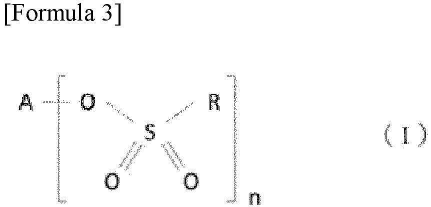

In the formula, A is a group I element or a group II element, R is a hydrocarbon group, and n is 1 or 2. A preferably is a group I element. Among these, Li or Na is more preferable, and Li is particularly preferable.

In the formula (I), R preferably is an alkyl group. The number of carbon atoms in the alkyl group is preferably less than or equal to 5, and more preferably less than or equal to 3. From the viewpoints of reduction in the reaction resistance and the like, a preferable example of R is an alkyl group having less than or equal to 3 carbon atoms, and specifically preferably a methyl group. In R, some of hydrogen bonded to carbon may be replaced with fluorine. In the formula (I), n preferably is 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate are preferable, and lithium methanesulfonate is particularly preferable.

The sulfonate compound is uniformly present on the entire particle surfaces of the lithium-containing composite oxide, for example. The presence of the sulfonate compound on the particle surfaces of the lithium-containing composite oxide may be confirmed by Fourier transform infrared spectrometry (FT-IR). In an infrared absorption spectrum obtained by FT-IR, the positive electrode active material including lithium methanesulfonate has absorption peaks near 1238 cm⁻¹, 1175 cm⁻¹, 1065 cm⁻¹, and 785 cm⁻¹, for example. The peaks near 1238 cm⁻¹, 1175 cm⁻¹, and 1065 cm⁻¹ are peaks attributed to SO stretching vibration derived from lithium methanesulfonate. The peak near 785 cm⁻¹ is a peak attributed to CS stretching vibration derived from lithium methanesulfonate.

Also, in the positive electrode active material including a sulfonate compound other than lithium methanesulfonate, the presence of the sulfonate compound may be confirmed from absorption peaks of the infrared absorption spectrum derived from the sulfonate compound. The presence of the sulfonate compound on the particle surfaces of the lithium-containing composite oxide may also be confirmed by ICP, atomic absorption spectrometry, X-ray photoelectron spectrometry (XPS), synchrotron XRD measurement, TOF-SIMS, or the like.

The positive electrode active material, which is an example of an embodiment, may be manufactured by the following method. The manufacturing method described here is an example, and the method for manufacturing the positive electrode active material is not limited to this method.

First, a metal oxide containing a metal element such as Ni, Co, Al, and Mn is synthesized. Then, this metal oxide and a lithium compound are mixed and calcined to obtain the lithium-containing composite oxide. The metal oxide may be synthesized by, for example, while stirring a solution of metal salts including Ni, Co, Al, and Mn, adding a solution of an alkali such as sodium hydroxide dropwise to adjust a pH on the alkaline side (for example, greater than or equal to 8.5 and less than or equal to 12.5) to precipitate (coprecipitate) a composite hydroxide including the metal elements such as Ni, Co, Al, and Mn, and thermally treating this composite hydroxide. The thermal treatment temperature is not particularly limited, and may be greater than or equal to 300°C and less than or equal to 600°C as an example.

Examples of the lithium compound include Li₂CO₃, LiOH, Li₂O₂, Li₂O, LiNO₃, LiNO₂, Li₂SO₄, LiOH·H₂O, LiH, and LiF. The metal oxide and the lithium compound are mixed so that a mole ratio between the metal elements in the metal oxide and Li in the lithium compound is, for example, greater than or equal to 1:0.98 and less than or equal to 1:1.1. When the metal oxide and the lithium compound are mixed, another metal raw material may be added as necessary.

The mixture of the metal oxide and the lithium compound is calcined under an oxygen atmosphere, for example. The mixture may be calcined via a plurality of temperature-raising processes. The calcining step includes, for example: a first temperature-raising step of raising a temperature at a temperature-raising rate of greater than or equal to 1.0 °C/min and less than or equal to 5.5 °C/min to greater than or equal to 450°C and less than or equal to 680°C; and a second temperature-raising step of raising a temperature at a temperature-raising rate of greater than or equal to 0.1 °C/min and less than or equal to 3.5 °C/min to greater than 680°C. The highest reaching temperature in the calcining step may be set at greater than or equal to 700°C and less than or equal to 850°C, and this temperature may be held for greater than or equal to 1 hour and less than or equal to 10 hours.

Then, the calcined product (lithium-containing composite oxide) is washed with water and dehydrated to obtain a cake-like composition. This washing step removes the remained alkali component. The washing with water and the dehydration may be performed by conventionally known methods. Thereafter, the cake-like composition is dried to obtain a powdery composition. The drying step may be performed under a vacuum atmosphere. An example of the drying conditions is at a temperature of greater than or equal to 150°C and less than or equal to 400°C for greater than or equal to 0.5 hours and less than or equal to 15 hours.

The sulfonate compound is added into the cake-like composition obtained in the washing step or the powdery composition obtained in the drying step, for example. In this case, a sulfonic acid solution may be added instead of the sulfonate compound or together with the sulfonate compound. This yields the positive electrode active material having the sulfonate compound adhering to the particle surfaces of the lithium-containing composite oxide. The sulfonate compound may be added as an aqueous dispersion. The sulfonic acid solution is preferably an aqueous solution of a sulfonic acid. A concentration of the sulfonic acid in the sulfonic acid solution is, for example, greater than or equal to 0.5 mass% and less than or equal to 40 mass%.

Since the lithium compound remains in the cake-like composition at a certain degree, adding the sulfonic acid solution into the cake-like composition allows Li dissolved in water in the cake to react with the sulfonic acid to obtain the lithium sulfonate.

### [Negative Electrode]

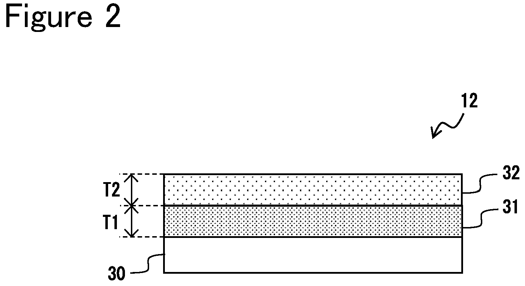

FIG. 2 is a sectional view of the negative electrode 12 of an example of an embodiment. As illustrated in FIG. 2, the negative electrode 12 includes a negative electrode core 30, a first negative electrode mixture layer 31 disposed on a surface of the negative electrode core 30, and a second negative electrode mixture layer 32 disposed on a surface of the first negative electrode mixture layer 31. A thickness T1 of the first negative electrode mixture layer 31 and a thickness T2 of the second negative electrode mixture layer 32 satisfy 0.1 ≤ T1/(T1+T2) ≤ 0.9. A case where T1/(T1+T2) < 0.1 or T1/(T1+T2) > 0.9 deteriorates the charge-discharge cycle characteristics.

For the negative electrode core 30, a foil of a metal stable within a potential range of the negative electrode 12, such as copper, a film in which such a metal is disposed on a surface thereof, and the like may be used. The first negative electrode mixture layer 31 and the second negative electrode mixture layer 32 each include a negative electrode active material and a binder, and are preferably provided on both surfaces of the negative electrode core 30 except for a portion where the negative electrode lead 21 is to be connected. The first negative electrode mixture layer 31 and the second negative electrode mixture layer 32 may further include a conductive agent such as CNT. Content rates of the conductive agent in the first negative electrode mixture layer 31 and the second negative electrode mixture layer 32 are, for example, greater than or equal to 0 mass% and less than or equal to 20 mass%.

The negative electrode active material included in the first negative electrode mixture layer 31 and the second negative electrode mixture layer 32 is not particularly limited as long as the material can reversibly occlude and release lithium ions. As the negative electrode active material, a carbon material is typically used. The carbon material is, for example, at least one selected from the group consisting of natural graphite, artificial graphite, soft carbon, and hard carbon. Among these, artificial graphite such as massive artificial graphite (MAG) or graphitized mesophase-carbon microbead (MCMB); natural graphite such as flake graphite, massive graphite, or amorphous graphite; or a mixture thereof is preferably used. A volume-based D50 of the carbon material is, for example, greater than or equal to 1 µm and less than or equal to 30 µm, and preferably greater than or equal to 5 µm and less than or equal to 25 µm.

The soft carbon and the hard carbon are classified as amorphous carbon in which a graphite crystal structure is not developed. More specifically, the amorphous carbon means a carbon content with a d(002) spacing by X-ray diffraction of greater than or equal to 0.342 nm. The soft carbon is also called as easily graphitized carbon, which is carbon easily graphitized by a high-temperature treatment compared with the hard carbon. The hard carbon is also called as hardly graphitized carbon. For the configuration of the present invention, the soft carbon and the hard carbon are not necessarily distinguished clearly. As the negative electrode active material, graphite and at least any one amorphous carbon of soft carbon and hard carbon may be used in combination.

The negative electrode active material included in the first negative electrode mixture layer 31 and the second negative electrode mixture layer 32 preferably includes a silicon-containing material from the viewpoint of high capacity. Since the silicon-containing material causes large change in volume during charge and discharge compared with the carbon material, the case where the first negative electrode mixture layer 31 and the second negative electrode mixture layer 32 include the silicon-containing material tends to cause peeling between the negative electrode core 30 and the first negative electrode mixture layer 31. However, as described later, setting the content rate of the binder in the first negative electrode mixture layer 31 to be larger than the content rate of the binder in the second negative electrode mixture layer 32 can inhibit occurrence of the peeling to improve the charge-discharge cycle characteristics. The silicon-containing material may be any material as long as the material contains Si, and an example thereof includes a silicon alloy, a silicon compound, and a composite material containing Si. Among these, the composite material containing Si is preferable. D50 of the composite oxide is typically smaller than D50 of the graphite. A volume-based D50 of the composite material is, for example, greater than or equal to 1 µm and less than or equal to 15 µm. The silicon-containing material may be used singly, or may be used in combination of two or more thereof.

The preferable silicon-containing material (the above composite material) is of composite particles including an ion-conductive phase, and Si phases dispersed in the ion-conductive phase. The ion-conductive phase is, for example, at least one selected from the group consisting of a silicate phase, a carbon phase, a silicide phase, and a silicon oxide phase. The silicide phase is a phase of a compound composed of Si and an element more electrically positive than Si, and an example thereof includes NiSi, Mg₂Si, and TiSi₂. The Si phase is formed by Si dispersed as fine particles. The ion-conductive phase is a continuous phase constituted by aggregation of particles finer than the Si phase.

An average value of sizes of the Si phases is preferably greater than or equal to 1 nm and less than or equal to 200 nm, and more preferably greater than or equal to 1 nm and less than or equal to 100 nm. The average size of the Si phases is calculated by averaging diameters of circumscribed circles in the Si phases extracted by analyzing a photographed SEM image of a particle cross section of the silicon-containing material. The average size of the Si phases may be greater than or equal to 1 nm and less than or equal to 10 nm, for example. Reducing the size of the Si phase may reduce the particle expansion coefficient with charge and discharge while keeping the high capacity.

The composite material may have a conductive layer covering a surface of the ion-conductive phase. The conductive layer is constituted with a material having higher conductivity than the ion-conductive layer, and forms a good conductive path in the negative electrode mixture layer 41. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, and more preferably greater than or equal to 5 nm and less than or equal to 100 nm with considering achievement of conductivity and diffusability of Li ions toward particle inside. The thickness of the conductive layer may be measured by observing a cross section of the composite material using a SEM or a transmission electron microscope (TEM).

An example of the preferable composite material containing Si is of composite particles that have a sea-island structure in which fine Si is substantially uniformly dispersed in an amorphous silicon oxide phase, and that is represented entirely by the general formula SiOₓ (0.5 ≤ x ≤ 1.5). The main component of silicon oxide may be silicon dioxide. The silicon oxide phase may be doped with Li.

Another example of the preferable composite material containing Si includes composite particles having a sea-island structure in which fine Si is substantially uniformly dispersed in an amorphous silicate phase. The silicate phase includes at least one element selected from the group consisting of, for example, a group I element and a group II element in the periodic table. The silicate phase may further include at least one element selected from the group consisting of B, Al, Zr, Nb, Ta, V, La, Y, Ti, P, Bi, Zn, Sn, Pb, Sb, Co, Er, F, and W.

A preferable silicate phase is a lithium silicate phase containing Li. The lithium silicate phase is, for example, a phase of a composite oxide represented by the general formula Li_{2z}SiO_{(2+z)} (0 < z < 2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. In at least a part of the silicon-containing material, the ion-conductive phase is preferably the carbon phase. The carbon phase is preferably an amorphous carbon phase. The carbon phase may include a crystalline phase component, but preferably includes more amorphous phase component than the crystalline phase component. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

In the first negative electrode mixture layer 31 and the second negative electrode mixture layer 32, a proportion of the silicon-containing material included in the negative electrode active material is, for example, greater than or equal to 3 mass% and less than or equal to 20 mass%. The proportion of the silicon-containing material in the first negative electrode mixture layer 31 and the proportion of the silicon-containing material in the second negative electrode mixture layer 32 may be the same as or different from each other.

Examples of the binder included in the first negative electrode mixture layer 31 and the second negative electrode mixture layer 32 include styrene-butadiene rubber (SBR), nitrile-butadiene rubber (NBR), fluorine-containing resins such as polytetrafluoroethylene (PTFE) and polyvinylidene fluoride (PVDF), polyacrylonitrile (PAN), a polyimide, an acrylic resin, and a polyolefin. Among these, SBR and NBR are preferable, and SBR is particularly preferable. These may be used singly, or may be used in combination of greater than or equal to two thereof. The binder included in the first negative electrode mixture layer 31 and the binder included in the second negative electrode mixture layer 32 may be different from each other, but preferably the same as each other.

A content rate C1 of the binder in the first negative electrode mixture layer 31 and a content rate C2 of the binder in the second negative electrode mixture layer 32 satisfy C1 > C2. It is considered that this increases the adhesiveness between the negative electrode core 30 and the first negative electrode mixture layer 31 to improve the charge-discharge cycle characteristics. C1 is a proportion of a mass of the binder included in the first negative electrode mixture layer 31 relative to a total mass of the first negative electrode mixture layer 31, and C2 is a proportion of a mass of the binder included in the second negative electrode mixture layer 32 relative to a total mass of the second negative electrode mixture layer 32.

C1 and C2 preferably satisfy 1.1 ≤ C1/C2 ≤ 5, more preferably satisfy 1.1 ≤ C1/C2 ≤ 3, and particularly preferably satisfy 1.5 ≤ C1/C2 ≤ 2. This allows the effect of improving the charge-discharge cycle characteristics to be more remarkable.

C1 preferably satisfies C1 ≥ 0.5 mass%, more preferably satisfies C1 ≥ 0.7 mass%, and particularly preferably satisfies C1 ≥ 1 mass%. This allows the effect of improving the charge-discharge cycle characteristics to be more remarkable. An upper limit of C1 is 5 mass%, for example. C2 satisfies 0.1 mass% ≤ C2 ≤ 2 mass%, for example.

The first negative electrode mixture layer 31 and the second negative electrode mixture layer 32 may further contain a thickener. Examples of the thickener included in the negative electrode mixture layers include carboxymethylcellulose (CMC) or a salt thereof (such as CMC-Na), polyacrylic acid (PAA) or a salt thereof (which may be PAA-Na, PAA-K, and the like, or a partially neutralized salt), and polyvinyl alcohol (PVA). These may be used singly, or may be used in combination of greater than or equal to two thereof.

Next, a method for forming the first negative electrode mixture layer 31 and the second negative electrode mixture layer 32 will be described. For example, the negative electrode active material, the binder, and a solvent such as water are firstly mixed to prepare a first negative electrode mixture slurry. Separately to this, the negative electrode active material, the binder, and a solvent such as water are mixed to prepare a second negative electrode mixture slurry. The content rate of the binder in the first negative electrode mixture slurry is larger than the content rate of the binder in the second negative electrode mixture slurry. Then, the first negative electrode mixture slurry is applied on both surfaces of the negative electrode core, the coating film is dried, then the second negative electrode mixture slurry is applied on both the surfaces on the coating film of the first negative electrode mixture slurry, and then the coating film is dried. Thereafter, the coating film can be rolled with a roller to form the first negative electrode mixture layer 31 and the second negative electrode mixture layer 32. In the above method, the first negative electrode mixture slurry is applied and dried, and then the second negative electrode mixture slurry is applied. However, the second negative electrode mixture slurry may be applied after the first negative electrode mixture slurry is applied and before the coating film is dried. After the first negative electrode mixture slurry is applied, dried, and rolled, the second negative electrode mixture slurry may be applied on the first negative electrode mixture layer 31. By changing the rolling conditions for the first negative electrode mixture layer 31 and the second negative electrode mixture layer 32, filling densities thereof may be more freely regulated.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On an interface between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Production of Positive Electrode Active Material]

A composite hydroxide represented by [Ni_{0.90}Al_{0.05}Mn_{0.05}](OH)₂ obtained by a coprecipitation method was calcined at 500°C for 8 hours to obtain an oxide (Ni_{0.90}Al_{0.05}Mn_{0.05}O₂). Then, LiOH and the composite oxide were mixed so that a mole ratio between Li and a total amount of Ni, Al, and Mn was 1.03:1 to obtain a mixture. This mixture was calcined under an oxygen flow with an oxygen concentration of 95% (a flow rate of 2 mL/min per 10 cm³ and 5 L/min per kilogram of the mixture) at a temperature-raising rate of 2.0 °C/min from room temperature to 650°C, and then calcined at a temperature-raising rate of 0.5 °C/min from 650°C to 780°C to obtain a lithium-containing composite oxide.

Into the obtained lithium-containing composite oxide, water was added so that a slurry concentration was 1500 g/L, and the slurry was stirred for 15 minutes and filtered to obtain a cake-like composition. Into this cake-like composition, powdery lithium methanesulfonate was added. An amount of the added lithium methanesulfonate was 0.5 mass% relative to the total mass of the lithium-containing composite oxide. After lithium methanesulfonate was added, the mixture was dried under a vacuum atmosphere and a condition at 180°C for 2 hours to obtain a positive electrode active material. By Fourier transform infrared spectrometry (FT-IR), the presence of lithium methanesulfonate on the particle surfaces of the composite oxide was confirmed.

### [Production of Positive Electrode]

The positive electrode active material, acetylene black, and polyvinylidene fluoride were mixed at a mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating film was dried and compressed, and then the positive electrode core was cut to a predetermined electrode size to produce a positive electrode in which a positive electrode mixture layer was disposed on both surfaces of the positive electrode core. At a part of the positive electrode, an exposed portion where the surface of the positive electrode core was exposed was provided.

### [Production of Negative Electrode]

Artificial graphite and SiO were mixed at a mass ratio of 92.5:7.5, and this mixture was used as a negative electrode active material. Mixing 100 parts by mass of the negative electrode active material, 1 part by mass of styrene-butadiene rubber (SBR), and 1 part by mass of carboxymethylcellulose (CMC) was performed, and an appropriate amount of water was added to prepare a first negative electrode mixture slurry. Mixing 100 parts by mass of the negative electrode active material, 0.5 parts by mass of SBR, and 1 part by mass of CMC was performed, and an appropriate amount of water was added to prepare a second negative electrode mixture slurry.

The first negative electrode mixture slurry was applied on both surfaces of a negative electrode core composed of copper foil by a doctor blade method, and the coating film was dried to form a first negative electrode mixture layer. On the first negative electrode mixture layer, the above second negative electrode mixture slurry was applied and dried to form a second negative electrode mixture layer. In this case, an applying mass ratio per unit area of the first negative electrode mixture slurry and the second negative electrode mixture slurry was set to 50:50. The first negative electrode mixture layer and the second negative electrode mixture layer were rolled with a roller to produce a negative electrode. A value of T1/(T1+T2) of the produced negative electrode, calculated from a thickness T1 of the first negative electrode mixture layer and a thickness T2 of the second negative electrode mixture layer, was 0.5. At a part of the negative electrode, an exposed portion where the surface of the negative electrode core was exposed was provided.

### [Preparation of Non-Aqueous Electrolyte]

Into a mixed solvent in which ethylene carbonate (EC), ethyl methyl carbonate (EMC), and dimethyl carbonate (DMC) were mixed at a volume ratio (25°C) of 3:3:4, LiPF₆ was dissolved at a concentration of 1.2 mol/L to prepare a non-aqueous electrolyte.

### [Production of Test Cell (Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin to produce a wound electrode assembly. An insulating plate was each disposed on the upper and lower parts of the electrode assembly, and the electrode assembly was housed in an exterior housing can. The negative electrode lead was welded to a bottom of the bottomed cylindrical exterior housing can, and the positive electrode lead was welded to a sealing assembly. The electrolyte liquid was injected into the exterior housing can, and an opening portion of the exterior housing can was sealed with the sealing assembly via a gasket to produce a secondary battery as a test cell.

### [Evaluation of Initial Discharge Capacity and Charge-Discharge Cycle Characteristics (Capacity Retention after Cycle Test)]

Under a temperature environment at 25°C, the test cell was charged at a constant current of 0.2 C until a battery voltage reached 4.2 V, and then charged at a constant voltage of 4.2 V until a current value reached 0.02 C. Thereafter, the test cell was discharged at a constant current of 0.2 C until the battery voltage reached 2.5 V, and a discharge capacity at this time was specified as an initial discharge capacity. This charge and discharge was specified as one cycle, and performed with 200 cycles. The initial discharge capacity and a discharge capacity at the 200th cycle were determined to calculate capacity retention by the following formula. A larger value of the capacity retention means more excellent charge-discharge cycle characteristics. Capacity retention (%) = Discharge capacity at 200th cycle/Initial discharge capacity × 100

### <Comparative Example 1>

A test cell was produced and evaluated in the same manner as in Example 1 except that, in the production of the positive electrode active material, the lithium methanesulfonate was not added.

### <Example 2>

A test cell was produced and evaluated in the same manner as in Example 1 except that, in the production of the negative electrode, the mixing ratio between the artificial graphite and SiO was 95:5.

### <Comparative Example 2>

A test cell was produced and evaluated in the same manner as in Example 2 except that, in the production of the positive electrode active material, the lithium methanesulfonate was not added.

### <Example 3>

A test cell was produced and evaluated in the same manner as in Example 1 except that, in the production of the negative electrode, SiO was not used and only the artificial graphite was used as the negative electrode active material.

### <Comparative Example 3>

A test cell was produced and evaluated in the same manner as in Example 3 except that, in the production of the positive electrode active material, the lithium methanesulfonate was not added.

### <Example 4>

A test cell was produced and evaluated in the same manner as in Example 1 except that, in the production of the negative electrode, SiO was not used and only the artificial graphite was used as the negative electrode active material, the mixing amount of SBR in the first negative electrode mixture slurry was 1.5 parts by mass, and the mixing amount of SBR in the second negative electrode mixture slurry was 1 part by mass.

### <Comparative Example 4>

A test cell was produced and evaluated in the same manner as in Example 4 except that, in the production of the positive electrode active material, the lithium methanesulfonate was not added.

### <Example 5>

A test cell was produced and evaluated in the same manner as in Example 1 except that, in the production of the negative electrode, the mixing ratio between the artificial graphite and SiO was 95:5, the mixing amount of SBR in the first negative electrode mixture slurry was 1.5 parts by mass, and the mixing amount of SBR in the second negative electrode mixture slurry was 1 part by mass.

### <Comparative Example 5>

A test cell was produced and evaluated in the same manner as in Example 5 except that, in the production of the positive electrode active material, the lithium methanesulfonate was not added.

### <Reference Example 1>

A test cell was produced and evaluated in the same manner as in Example 1 except that, in the production of the negative electrode, the mixing ratio between the artificial graphite and SiO was 95:5, and the mixing amount of SBR in the second negative electrode mixture slurry was 1 part by mass.

### <Reference Example 2>

A test cell was produced and evaluated in the same manner as in Reference Example 1 except that, in the production of the positive electrode active material, the lithium methanesulfonate was not added.

### <Example 6-1>

A test cell was produced and evaluated in the same manner as in Example 1 except that, in the production of the positive electrode active material, the amount of the added lithium methanesulfonate relative to the total mass of the lithium-containing composite oxide was 0.1 mass%.

### <Example 6-2>

A test cell was produced and evaluated in the same manner as in Example 6-1 except that, in the production of the positive electrode active material, the amount of the added lithium methanesulfonate relative to the total mass of the lithium-containing composite oxide was 0.3 mass%.

### <Example 6-3>

A test cell was produced and evaluated in the same manner as in Example 6-1 except that, in the production of the positive electrode active material, the amount of the added lithium methanesulfonate relative to the total mass of the lithium-containing composite oxide was 1 mass%.

### <Example 6-4>

A test cell was produced and evaluated in the same manner as in Example 6-1 except that, in the production of the positive electrode active material, sodium methanesulfonate was used instead of lithium methanesulfonate, and the amount of the added sodium methanesulfonate relative to the total mass of the lithium-containing composite oxide was 0.5 mass%.

### <Example 6-5>

A test cell was produced and evaluated in the same manner as in Example 6-1 except that, in the production of the positive electrode active material, lithium ethanesulfonate was used instead of lithium methanesulfonate, and the amount of the added lithium ethanesulfonate relative to the total mass of the lithium-containing composite oxide was 0.5 mass%.

### <Comparative Example 6-1>

A test cell was produced and evaluated in the same manner as in Example 6-1 except that, in the production of the positive electrode active material, the lithium methanesulfonate was not added.

### <Comparative Example 6-2>

A test cell was produced and evaluated in the same manner as in Example 6-1 except that, in the production of the positive electrode active material, lithium succinate was added instead of methanesulfonic acid, and the amount of the added lithium succinate relative to the total mass of the lithium-containing composite oxide was 0.5 mass%.

### <Comparative Example 6-3>

A test cell was produced and evaluated in the same manner as in Example 6-1 except that, in the production of the positive electrode active material, lithium oxalate was added instead of methanesulfonic acid, and the amount of the added lithium oxalate relative to the total mass of the lithium-containing composite oxide was 0.5 mass%.

### <Example 7-1>

A test cell was produced and evaluated in the same manner as in Example 1 except that, in the production of the negative electrode, the applying mass ratio per unit area of the first negative electrode mixture slurry and the second negative electrode mixture slurry was 10:90. The value of T1/(T1+T2) was 0.1.

### <Example 7-2>

A test cell was produced and evaluated in the same manner as in Example 1 except that, in the production of the negative electrode, the applying mass ratio per unit area of the first negative electrode mixture slurry and the second negative electrode mixture slurry was 25:75. The value of T1/(T1+T2) was 0.25.

### <Example 7-3>

A test cell was produced and evaluated in the same manner as in Example 1 except that, in the production of the negative electrode, the applying mass ratio per unit area of the first negative electrode mixture slurry and the second negative electrode mixture slurry was 75:25. The value of T1/(T1+T2) was 0.75.

### <Example 7-4>

A test cell was produced and evaluated in the same manner as in Example 1 except that, in the production of the negative electrode, the applying mass ratio per unit area of the first negative electrode mixture slurry and the second negative electrode mixture slurry was 90:10. The value of T1/(T1+T2) was 0.9.

### <Comparative Example 7-1>

A test cell was produced and evaluated in the same manner as in Example 1 except that, in the production of the negative electrode, the applying mass ratio per unit area of the first negative electrode mixture slurry and the second negative electrode mixture slurry was 5:95. The value of T1/(T1+T2) was 0.05.

### <Comparative Example 7-2>

A test cell was produced and evaluated in the same manner as in Example 1 except that, in the production of the negative electrode, the applying mass ratio per unit area of the first negative electrode mixture slurry and the second negative electrode mixture slurry was 95:5. The value of T1/(T1+T2) was 0.95.

Tables 1 to 3 show the evaluation results of the test cells of Examples, Comparative Examples, and Reference Examples. The initial discharge capacity and the capacity retention of the test cells of Examples 1 to 5 in Table 1 are respectively values relative to the initial discharge capacity and the capacity retention of the test cells of Comparative Examples 1 to 5 being 100. The initial discharge capacity and the capacity retention of the test cell of Reference Example 1 are values relative to the initial discharge capacity and the capacity retention of the test cell of Reference Example 2 being 100. The initial discharge capacity and the capacity retention of the test cells of Examples 6-1 to 6-5 and Comparative Examples 6-2 and 6-3 in Table 2 are values relative to the initial discharge capacity and the capacity retention of the test cell of Comparative Example 2-1 being 100. The initial discharge capacity and the capacity retention of the test cells of Examples 1 and 7-1 to 7-4 and Comparative Examples 7-1 to 7-2 in Table 3 are values relative to the initial discharge capacity and the capacity retention of the test cell of Comparative Example 1 being 100.

**[Table 1]**

| | Performed content | | | | | | | | Evaluation result | |
|---|---|---|---|---|---|---|---|---|---|---|
| | Positive electrode | | First negative electr ode mixture layer | | Second negative elec trode mixture layer | | C1/C2 | T1 /(T1+T2) | Initial discharge capacity | Capacity retention |
| | Additive compound | Addition amount [mass%] | SiO conte nt rate [mass%] | C1 [mass%] | SiO conte nt rate [mass%] | C2 [mass%] | | | | |
| Example 1 | Li methan esulfonate | 0.5 | 7.5 | 1 | 2.5 | 0.5 | 2 | 0.5 | 101.6 | 103 |
| Comparative Example 1 | None | - | 7.5 | 1 | 2.5 | 0.5 | 2 | 0.5 | 100 | 100 |
| Example 2 | Li methan esulfonate | 0.5 | 5 | 1 | 5 | 0.5 | 2 | 0.5 | 101.6 | 102 |
| Comparative Example 2 | None | - | 5 | 1 | 5 | 0.5 | 2 | 0.5 | 100 | 100 |
| Example 3 | Li methan esulfonate | 0.5 | - | 1 | - | 0.5 | 2 | 0.5 | 101.6 | 103 |
| Comparative Example 3 | None | - | - | 1 | - | 0.5 | 2 | 0.5 | 100 | 100 |
| Example 4 | Li methan esulfonate | 0.5 | - | 1.5 | - | 1 | 1.5 | 0.5 | 101.6 | 102 |
| Comparative Example 4 | None | - | - | 1.5 | - | 1 | 1.5 | 0.5 | 100 | 100 |
| Example 5 | Li methan esulfonate | 0.5 | 5 | 1.5 | 5 | 1 | 1.5 | 0.5 | 101.6 | 102 |
| Comparative Example 5 | None | - | 5 | 1.5 | 5 | 1 | 1.5 | 0.5 | 100 | 100 |
| Reference Example 1 | Li methan esulfonate | 0.5 | 5 | 1 | 5 | 1 | 1 | 0.5 | 101.6 | 98 |
| Reference Example 2 | None | - | 5 | 1 | 5 | 1 | 1 | 0.5 | 100 | 100 |

**[Table 2]**

| | Performed content | | | | | | | | Evaluation result | |
|---|---|---|---|---|---|---|---|---|---|---|
| | Positive electrode | | First negative electr ode mixture layer | | Second negative elect rode mixture layer | | C1/ C2 | T1 /(T1+T2) | Initial discharge capacity | Capacity retention |
| | Additive compound | Addition amount [mass%] | SiO conte nt rate [mass%] | C1 [mass%] | SiO conte nt rate [mass%] | C2 [mass%] | | | | |
| Example 6-1 | Li methane sulfonate | 0.1 | 7.5 | 1 | 2.5 | 0.5 | 2 | 0.5 | 100.5 | 103 |
| Example 6-2 | Li methane sulfonate | 0.3 | 7.5 | 1 | 2.5 | 0.5 | 2 | 0.5 | 100.9 | 103 |
| Example 6-3 | Li methane sulfonate | 1 | 7.5 | 1 | 2.5 | 0.5 | 2 | 0.5 | 100.7 | 103 |
| Example 6-4 | Li methane sulfonate | 0.5 | 7.5 | 1 | 2.5 | 0.5 | 2 | 0.5 | 100.9 | 102 |
| Example 6-5 | Li ethanesu lfonate | 0.5 | 7.5 | 1 | 2.3 | 0.5 | 2 | 0.5 | 100.9 | 102 |
| Comparative Example 6-1 | None | - | 7.5 | 1 | 2.5 | 0.5 | 2 | 0.5 | 100 | 100 |
| Comparative Example 6-2 | Li succinat e | 0.5 | 7.5 | 1 | 2.5 | 0.5 | 2 | 0.5 | 100 | 99 |
| Comparative Example 6-3 | Li oxalate | 0.5 | 7.5 | 1 | 2.5 | 0.5 | 2 | 0.5 | 100 | 99 |

**[Table 3]**

| | Performed content | | | | | | | | Evaluation result | |
|---|---|---|---|---|---|---|---|---|---|---|
| | Positive electrode | | First negative electrod e mixture laver | | Second negative elect rode mixture layer | | C1/C2 | T1 /(T1+T2) | Initial discharge capacity | Capacity retention |
| | Additive compound | Addition a mount [mass%] | SiO conte nt rate [mass%] | C1 [mass%] | SiO conte nt rate [mass%] | C2 [mass%] | | | | |
| Example 7-1 | Li methanes ulfonate | 0.5 | 7.5 | 1 | 2.5 | 0.5 | 2 | 0.1 | 101.6 | 102 |
| Example 7-2 | Li methanes ulfonate | 0.5 | 7.5 | 1 | 2.5 | 0.5 | 2 | 0.25 | 101.6 | 102 |
| Example 1 | Li methanes ulfonate | 0.5 | 7.5 | 1 | 2.5 | 0.5 | 2 | 0.5 | 101.6 | 103 |
| Example 7-3 | Li methanes ulfonate | 0.5 | 7.5 | 1 | 2.5 | 0.5 | 2 | 0.75 | 101.6 | 102 |
| Example 7-4 | Li ethanesulf onate | 0.5 | 7.5 | 1 | 2.5 | 0.5 | 2 | 0.9 | 101.6 | 102 |
| Comparative Example 1 | None | - | 7.5 | 1 | 2.5 | 0.5 | 2 | 0.5 | 100 | 100 |
| Comparative Example 7-1 | Li methanes ulfonate | 0.5 | 7.5 | 1 | 2.5 | 0.5 | 2 | 0.05 | 101.6 | 100 |
| Comparative Example 7-2 | Li methanes ulfonate | 0.5 | 7.5 | 1 | 2.5 | 0.5 | 2 | 0.95 | 101.6 | 99 |

In Tables 1 and 2, all the test cells of Examples exhibited large initial discharge capacity compared with the test cell of corresponding Comparative Example, and improved capacity retention. From the results of Reference Examples 1 and 2 in Table 1, it is understood that a case where C1/C2 > 1 is not satisfied does not improve the capacity retention. From the results of Comparative Examples 6-2 and 6-3 in Table 2, it is understood that the sulfonate compound has the remarkable effect compared with the succinate compound and the oxalate compound. From the results of Comparative Examples 7-1 and 7-2 in Table 3, it is understood that a case where 0.1 ≤ T1/(T1+T2) ≤ 0.9 is not satisfied deteriorates the capacity retention.

The present disclosure will be further described with the following embodiments.

### Constitution 1:

A non-aqueous electrolyte secondary battery, comprising:
a positive electrode; a negative electrode; and a non-aqueous electrolyte, wherein
the positive electrode includes a lithium-containing composite oxide and a sulfonate compound present on particle surfaces of the lithium-containing composite oxide,
the sulfonate compound is a compound represented by a formula (I),
the negative electrode includes a negative electrode core, a first negative electrode mixture layer disposed on a surface of the negative electrode core, and a second negative electrode mixture layer disposed on a surface of the first negative electrode mixture layer,
a thickness T1 of the first negative electrode mixture layer and a thickness T2 of the second negative electrode mixture layer satisfy 0.1 ≤ T1/(T1+T2) ≤ 0.9,
the first negative electrode mixture layer and the second negative electrode mixture layer each include a negative electrode active material and a binder, and
a content rate C1 of the binder in the first negative electrode mixture layer and a content rate C2 of the binder in the second negative electrode mixture layer satisfy C1 > C2. 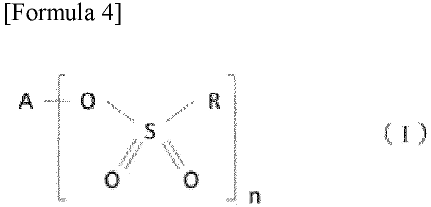 (In the formula, A is a group I element or a group II element, R is a hydrocarbon group, and n is 1 or 2.)

### Constitution 2:

The non-aqueous electrolyte secondary battery according to Constitution 1, wherein the A is the group I element.

### Constitution 3:

The non-aqueous electrolyte secondary battery according to Constitution 1, wherein the A is Li.

### Constitution 4:

The non-aqueous electrolyte secondary battery according to any one of Constitutions 1 to 3, wherein the R is an alkyl group.

### Constitution 5:

The non-aqueous electrolyte secondary battery according to any one of Constitutions 1 to 3, wherein the R is a methyl group.

### Constitution 6:

The non-aqueous electrolyte secondary battery according to any one of Constitutions 1 to 5, wherein an amount of the sulfonate compound present on a surface of the lithium-containing composite oxide is greater than or equal to 0.1 mass% and less than or equal to 1 mass% relative to a mass of the lithium-containing composite oxide.

### Constitution 7:

The non-aqueous electrolyte secondary battery according to any one of Constitutions 1 to 6, wherein the lithium-containing composite oxide has a layered rock-salt structure.

### Constitution 8:

The non-aqueous electrolyte secondary battery according to any one of Constitutions 1 to 7, wherein the C1 and the C2 satisfy 1.1 ≤ C1/C2 ≤ 5.

### Constitution 9:

The non-aqueous electrolyte secondary battery according to any one of Constitutions 1 to 8, wherein the C1 satisfies C1 ≥ 0.5 mass%.

### Constitution 10:

The non-aqueous electrolyte secondary battery according to any one of Constitutions 1 to 9, wherein the negative electrode active material includes a silicon-containing material.

### Constitution 11:

The non-aqueous electrolyte secondary battery according to Constitution 10, wherein the silicon-containing material includes SiOₓ (0.5 ≤ x ≤ 1.5).

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode core, 31 First negative electrode mixture layer, 32 Second negative electrode mixture layer.

## Claims

1. A non-aqueous electrolyte secondary battery, comprising:
a positive electrode;
a negative electrode; and
a non-aqueous electrolyte, wherein
the positive electrode includes a lithium-containing composite oxide and a sulfonate compound present on particle surfaces of the lithium-containing composite oxide,
the sulfonate compound is a compound represented by a formula (I),
the negative electrode includes a negative electrode core, a first negative electrode mixture layer disposed on a surface of the negative electrode core, and a second negative electrode mixture layer disposed on a surface of the first negative electrode mixture layer,
a thickness T1 of the first negative electrode mixture layer and a thickness T2 of the second negative electrode mixture layer satisfy 0.1 ≤ T1/(T1+T2) ≤ 0.9,
the first negative electrode mixture layer and the second negative electrode mixture layer each include a negative electrode active material and a binder, and
a content rate C1 of the binder in the first negative electrode mixture layer and a content rate C2 of the binder in the second negative electrode mixture layer satisfy C1 > C2. 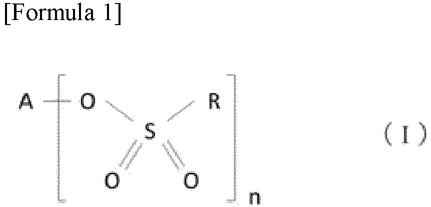 (In the formula, A is a group I element or a group II element, R is a hydrocarbon group, and n is 1 or 2.)

2. The non-aqueous electrolyte secondary battery according to claim 1, wherein the A is the group I element.

3. The non-aqueous electrolyte secondary battery according to claim 1, wherein the A is Li.

4. The non-aqueous electrolyte secondary battery according to claim 1, wherein the R is an alkyl group.

5. The non-aqueous electrolyte secondary battery according to claim 1, wherein the R is a methyl group.

6. The non-aqueous electrolyte secondary battery according to claim 1, wherein an amount of the sulfonate compound present on a surface of the lithium-containing composite oxide is greater than or equal to 0.1 mass% and less than or equal to 1 mass% relative to a mass of the lithium-containing composite oxide.

7. The non-aqueous electrolyte secondary battery according to claim 1, wherein the lithium-containing composite oxide has a layered rock-salt structure.

8. The non-aqueous electrolyte secondary battery according to claim 1, wherein the C1 and the C2 satisfy 1.1 ≤ C1/C2 ≤ 5.

9. The non-aqueous electrolyte secondary battery according to claim 1, wherein the C1 satisfies C1 ≥ 0.5 mass%.

10. The non-aqueous electrolyte secondary battery according to claim 1, wherein the negative electrode active material includes a silicon-containing material.

11. The non-aqueous electrolyte secondary battery according to claim 10, wherein the silicon-containing material includes SiOₓ (0.5 ≤ x ≤ 1.5).
